# EUROPÄISCHE PATENTSCHRIFT

(11) **EP 1 379 737 B1**
(45) Veröffentlichungstag und Bekanntmachung des Hinweises auf die Patenterteilung: **04.04.2007**
(21) Anmeldenummer: 02753711.7
(22) Anmeldetag: 16.03.2002
(51) Int. Cl.: E04C 2/52, E04B 5/48

(54) **VERFAHREN ZUR HERSTELLUNG EINES BETONELEMENTS SOWIE BETONELEMENTTEILS**
METHOD FOR PRODUCING A CONCRETE ELEMENT AND A CONCRETE ELEMENT PART
PROCEDE POUR PRODUIRE UN ELEMENT EN BETON ET UNE PARTIE D'ELEMENT EN BETON

(30) Priorität: 23.03.2001 DE 10114340
(43) Veröffentlichungstag der Anmeldung: 14.01.2004
(73) Patentinhaber: REHAU AG + Co, 95111 Rehau (DE)
(72) Erfinder: KOCH, Klaus, Paul, 95111 Rehau (DE); HERRMANN, Henry, 95111 Rehau (DE); KÜBLER, Rainer, 95111 Rehau (DE)
(86) Internationale Anmeldenummer: PCT/EP2002/002934
(87) Internationale Veröffentlichungsnummer: WO 2002/077384

(56) Entgegenhaltungen:
- DE-A- 19 848 561
- DE-C- 19 930 693

## Beschreibung

Die Erfindung betrifft ein Verfahren zur Herstellung eines eine Decke oder einen Boden bildenden Betonelements.

Im Gebäudebau werden Böden oder Decken zunehmend aus vorgefertigten Teilen gebildet, die entweder schon als Fertigteile vom Betonwerk angeliefert werden, oder die als Teilfertigelemente vor Ort noch fertig gestellt werden. Dabei werden vor allem in größeren Gebäuden zunehmend Böden oder Decken eingebaut, in denen in der neutralen Faser, also in der Horizontalebene, in der auch bei einer leichten Verbiegung der Decke keine Kräfte wirken, Rohrleitungen in der Regel mäanderförmig verlegt sind, durch die ein Heiz- oder Kühlmedium zirkuliert. Diese Rohrleitungen sind vollständig in das Betonelement eingegossen. Zum Temperieren des Gebäudes - sei es, dass dieses erwärmt oder gekühlt werden soll - wird durch die Rohrleitungen ein Medium, in der Regel Wasser, gepumpt, wodurch sich das Betonteil je nachdem erwärmt oder abkühlt. Auf diese Weise ist ein einfaches Temperieren des Gebäudes möglich, wobei man diese sogenannte Betonkerntemperierung vornehmlich zum Kühlen eines Gebäudes einsetzt, da hierdurch große Kühlleistungen im Bereich von 50-70 W/m² erreicht werden können.

Der Aufbau eines solchen Betonelementes erfolgt stets vor Ort auf dem Baufeld. Normalerweise wird von der Rohbaufirma die untere Schalungsebene bauseits erstellt. Auf diese untere Schalungsebene werden Schalungskästen zur Rohrdurchführung fixiert. Im Anschluss daran wird die untere Bewehrungslage ebenfalls durch die Rohbaufirma hergestellt. Auf der unteren Bewehrungslage werden anschließend auf sogenannten Q-Matten vorkonfektionierte Rohre, d.h. Betonkerntemperierungs-Module aufgelegt und fixiert.

Nach dieser ersten Alternative des Stands der Technik werden nun durch die Betonkerntemperierungs-Module und die untere Bewehrungslage hindurch Abstandhalter mit Quertraversen auf die untere Schalungsebene gestellt. Die Abstandhalter werden durch einen Stahlstab gegen Verrücken miteinander verbunden. Anschließend wird die obere Bewehrungslage erstellt. Der Abstandhalter dient unter anderem zur Aufnahme dieser oberen Bewehrungslage aus Stahl.
Nach Fertigstellung der oberen Bewehrungslage werden die Fixierungen der Betonkerntemperierungs-Module auf der unteren Bewehrungslage gelöst und das Modul wird durch die obere Bewehrungslage hindurch an der Quertraverse des Abstandhalters befestigt. Im Anschluss an diese Tätigkeiten folgt eine Sichtabnahme und Druckproben. Das so hergestellte Betonelement kann nun bauseits mit Beton auf dem Baufeld vergossen bzw. fertig gestellt werden. Diese Möglichkeit lässt zwar das lagegenaue Einbringen der Rohrleitungen zu, jedoch ist dieses Verfahren sehr aufwendig, da mit einer Vielzahl von separaten Elementen wie den Abstandshaltern sowie insbesondere der vorkonfektionierten, mit den Rohrleitungen versehenen zweiten Bewehrungslage gearbeitet werden muss. Darüber hinaus ist dieses System sehr unflexibel hinsichtlich der Größe der zu setzenden Decke, da die vorkonfektionierte, die Rohrleitung tragende Bewehrungsmatte eben bereits vorgefertigt ist und mithin speziell auf die entsprechende Deckengröße bemessen gebaut werden muss.

In der EP 0992 637 ist ein Betonelement sowie dessen Herstellungsverfahren beschrieben. Zur Herstellung einer Decke oder eines Bodens mittels dieses Betonelements wird ein unteres Betonelementteil mit oberseitig Rohrhalterelementen und oberseitigen Rohrhalterungen hergestellt und die Rohrleitungen lagestabil an den Rohrhalterungen befestigt und danach ein oberes Betonelementteil zur Fertigstellung des Betondeckenelements gegossen.

Die DE 198 48 561 A1 beschreibt ein gattungsgemäßes Verfahren zum Herstellen eines Halbfertigteils aus Beton mit integrierter Heizung und in der DE 199 30 693 C1 wird ein Verfahren zur Herstellung einer Betondecke für ein Gebäude beschrieben.

Eine dem Stand der Technik entsprechende Variante der Betonkerntemperierung ist ebenfalls durch eine bauseits hergestellte untere Schalungsebene gekennzeichnet. Auf dieser unteren Schalungsebene werden ebenfalls Schaltungskästen zur Rohrdurchführung befestigt. Im Anschluss daran erfolgt die Herstellung der unteren Bewehrungslage auf dem Baufeld. Auf der unteren Bewehrungslage werden im Anschluss daran Abstandhalterkörper aufgesetzt.
Die Abstandhalterkörper verfügen über einen Abstand von ca. 50 cm zueinander und verlaufen parallel zueinander. Die Abstandhalterkörper sind durch einen Längsstab in der neutralen Phase der Decke gekennzeichnet, der die einzelnen vertikalen Elemente der Abstandhalterkörper miteinander verbindet. Anschließend werden die Rohrleitungen auf den Stäben der Abstandhalterkörper in der neutralen Phase verlegt und fixiert. Hierzu werden die Rohrleitungen von entsprechend großen Rohrbunden abgewickelt. Im Anschluss daran wird auf den Oberbauten der Abstandhalterkörper bauseits die obere Bewehrungslage aufgelegt bzw. fertig gestellt. Abschlie-ßend wird die Stahlkonstruktion mit integrierten Rohrkreisen bauseits vor Ort mit Beton vergossen. Wenngleich dieses System etwas einfacher strukturiert ist wie das vorher beschriebene, so birgt es dennoch eine Reihe von Nachteilen. Einerseits besteht die Möglichkeit, dass die lediglich auf den Stäben ruhenden Rohrleitungen leicht verrutschen, das heißt, der Verlegeabstand kann nicht genau eingehalten werden. Um dem entgegenzuwirken ist es erforderlich, die Rohrleitungen mittels Mattenbindern oder dergleichen entsprechend zu fixieren, was ebenfalls äußerst aufwendig ist.

Darüber hinaus besteht hier die Gefahr, dass es, da die Leitungen von Hand verlegt werden, leicht zu Knicken im Bereich der Umlenkungen kommen kann, das heißt, der minimal zulässige Umlenkradius wird nicht eingehalten.

Eine dritte Möglichkeit sieht gemäß dem Stand der Technik vor, dass ein unteres Betonteil verwendet wird, bei dem oberseitig hervorragende Gitterträgerelemente vorgesehen sind. Diese Gitterträgerelemente bestehen aus vielen nebeneinander stehenden, pyramidenartigen Baustahlteilen, die über einen zentralen, oberseitig verlaufenden Verbindungsstab miteinander befestigt sind.

Die Verlegung der Rohrleitungen erfolgt hier derart, dass die Rohrleitung umständlich zwischen den Gitterträgerelementen hindurchgefädelt werden muss, wobei sie zur Einhaltung der Verlegeabstände an diesen unter Verwendung von Mattenbindern oder dergleichen zusätzlich noch fixiert werden muss. Eine Fixierung im Bereich zwischen den Gitterträgerelementen erreicht man nur, wenn man zusätzlich in diese Bereiche extra zugeschnittene Baustahlmatten einlegt. Auch dieses System ist äu-ßerst aufwendig, auch hier können die Biegeradien mitunter nicht eingehalten werden. Ferner ist die Zeit zur Fertigstellung der Decke sehr lange.

Der Erfindung liegt damit das Problem zugrunde, ein Verfahren anzugeben, das auf einfache Weise die Herstellung eines eine Decke oder einen Boden bildenden Betonelements ermöglicht.

Ein solches Verfahren zeichnet sich durch folgende Schritte aus Herstellen eines unteren Betonelementteils mit oberseitig vorstehenden Gitterträgerelementen,
- Anordnen von schienen- oder plattenartigen Rohrhalteelementen, die oberseitigen Rohrhalterungen aufweisen, an und im Wesentlichen senkrecht zu den eingegossenen Gitterträgerelementen,
- Verlegen einer oder mehrerer zur Führung eines Heiz- oder Kühlmediums dienenden Rohrleitungen, die lagestabil an den Rohrhalterungen der Rohrhalteelemente befestigt werden, und
- Gießen eines oberen Betonelementteils zur Fertigstellung des Betondeckenelements.

Das erfindungsgemäße Verfahren sieht vor, dass auf dem unteren Betonelementteil schienen- oder plattenartige Rohrhalteelemente vorgesehen werden, die oberseitige Rohrhalterungen aufweisen, an denen nachfolgend zu verlegende Rohrleitungen befestigt werden können. Es werden also zur Halterung der Rohrleitungen spezielle hierfür ausgebildete Rohrhalteelemente verwendet. Diese Rohrhalteelemente lassen ein definiertes Verlegen der Rohrleitungen zu, das heißt, es können exakt die gewünschten oder vorgeschriebenen Verlegeabstände eingehalten werden, da die Rohrhalteelemente entsprechend ausgebildet sind bzw. die Rohrhalterungen entsprechend positioniert sind.

Auch können die Biegeradien genau eingehalten werden, da diese wiederum durch den Abstand der Rohrhalterungen vorgegeben werden. Es ist also problemlos möglich, die Rohrleitung exakt und vorschriftsgemäß zu verlegen. Etwaige aufwendige oder umständliche Fixierungen, bei denen es sich ohnehin nur um Provisorien handelt, sind nicht erforderlich. Darüber hinaus sind die Rohrleitungen derart fest in den Rohrhalterungen aufgenommen, dass ein Aufschwimmen der Rohrleitungen beim Gießen der oberen Betonelementschicht ausgeschlossen ist. Insgesamt bietet sich hierdurch die Möglichkeit, auf einfache und schnelle Weise sehr exakt arbeiten zu können und das Betonetement herstellen zu können.

Dabei besteht einerseits die Möglichkeit, ein unteres Betonelementteil in Form eines vorgefertigten Fertigelements zu verwenden, das im Betonwerk bereits hergestellt wurde. Dieses wird an die Baustelle geliefert und positioniert. Auf diesem werden dann die Rohrhalteelemente befestigt und die Verlegearbeiten und schließlich das Gießen der oberen Betonelementschicht erfolgen. Das heißt, es findet hier die Fertigstellung vor Ort statt.

Alternativ dazu besteht aber aufgrund der erfindungsgemäßen Verwendung der platten-.oder schienenartigen Rohrhalteelemente die Möglichkeit, das Betonelement auch insgesamt im Betonwerk als Fertigteil herzustellen. Denn, wie ausgeführt, bietet die Verwendung der vorgefertigten Rohrhalteelemente die Möglichkeit, die Rohrleitungen exakt verlegen und führen zu können, so dass eine vorschriftsgemäße Installation der Rohrleitungen auch betonwerkseitig erfolgen kann. Das erfindungsgemäße Verfahren lässt also vorteilhaft auch die Erstellung eines Fertigteils zu, das vor Ort verbaut werden kann, ohne dass hier noch irgendwelche zusätzlichen Tätigkeiten bis auf das Herstellen der entsprechenden Anschlüsse der Rohrleitungen erforderlich werden.

Erfindungsgemäß sind die schienen- oder plattenartigen Rohrhalteelemente im Wesentlichen senkrecht zu in dem unteren Betonelementteil eingegossenen Gitterträgerelementen verlaufend angeordnet.

Normalerweise wird das untere Betonelementteil - sei es, dass es als vorgefertigtes Bauteil vor Ort verbaut wird, oder dass das Betonelementteil erst im Betonwerk gegossen wird - mit entsprechenden Gitterträgerelementen zusätzlich zu einer gegebenenfalls bereits eingegossenen Bewehrung bewehrt, wobei diese Gitterträgerelemente wie ausgeführt, parallel nebeneinander angeordnet sind. Werden nun die schienen- oder plattenartigen Rohrhalteelemente so angeordnet, dass sie im Wesentlichen senkrecht zu den Gitterträgerelementen verlaufen, so können die Rohrleitungen auf einfache Weise parallel zu den Gitterträgerelementen geführt werden. Um die Rohrleitungen an den Rändern des Betonelements umlenken zu können, müssen die Gitterträgerelemente in diesem Fall natürlich entsprechend kürzer bemessen werden, damit randseitig genügend Verlegeraum besteht und die Rohrleitungen nicht durch die Gitterträgerelemente hindurchgefädelt werden müssen. Die schienen- oder plattenartigen Rohrhalteelemente sind dabei mehrere Meter lang und werden zweckmäßigerweise zwischen die Gitterträgerelemente geschoben. Alternativ dazu besteht natürlich auch die Möglichkeit, entsprechend kurz bemessene schienen- oder plattenartige Rohrhalteelemente zu verwenden, die lediglich in den Freiraum zwischen zwei Gitterträgerelementen gebracht werden. Die schienen- oder plattenartigen Rohrhalteelemente sollten dabei im Wesentlichen parallel zueinander und um wenigstens 25 cm, insbesondere um wenigstens 50 cm voneinander beabstandet angeordnet werden. Ein Abstand von ca. 50 cm bietet zum einen hinreichende Lagestabilität, zum anderen werden nicht so viele Rohrhalteelemente benötigt.

Im Rahmen der baustellenseitigen Befestigung der Rohrhalteelemente werden die schienenartigen Rohrhalteelemente an in dem unteren Betonelementteil oberseitig vorstehend eingegossenen Gitterträgerelementen befestigt.

Eine Alternative im Rahmen der baustellenseitigen Befestigung der Rohrhalteelemente sieht vor, dass die schienenartigen Rohrhalteelemente gegebenenfalls zusätzlich zum Befestigen mit Befestigungsnägeln an in dem unteren Betonelementteil oberseitig vorstehend eingegossenen Gitterträgerelementen gegebenenfalls zusätzlich befestigt werden.

Hier bietet sich die Möglichkeit an, die Rohrhalteelemente an den Gitterträgerelementen klemmend oder mittels Mattenbindern oder dergleichen zu befestigen.

Die Rohrhalteelemente werden mit als Clips-, Klemm- oder Rasthalterungen ausgebildeten oberseitigen Rohrhalterungen verwendet. Diese Clips-, Klemm- oder Rasthalterungen lassen ein sehr einfaches Befestigen der Rohrleitungen zu. Diese müssen lediglich in die normalerweise oberseitig offenen Halterungen eingedrückt werden, wo sie dann entsprechend gehaltert werden.

Natürlich besteht auch die Möglichkeit, die Rohrleitungen von der Seite her einzuführen etc., dies kommt auf die konkrete Ausgestaltung der Rohrhalterungen an. Gleichermaßen ist natürlich eine Entnahme sehr einfach, wenn die Rohrleitung einmal fehlerhaft verlegt wurde. Denkbar sind unterschiedlichste Halterungsausbildungen, solange sie ein einfaches Befestigen ermöglichen. Die Rohrhalteelemente selbst sind zweckmäßigerweise aus Kunststoff gebildet, wobei hierfür ein sehr temperaturstabiler Kunststoff zu nehmen ist, da die Rohrhalteelemente aufgrund der unterschiedlichsten Einsatzmöglichkeiten bzw. -orte des Betonelements mitunter sehr großen Temperaturbeanspruchungen ausgesetzt sind.

Schließlich kann vorgesehen sein, dass in das untere Betonelementteil und/oder in das obere Betonelementteil eine Bewehrung eingebracht wird oder ist.

Wie bereits beschrieben, besteht weiterhin die Möglichkeit, dass als unteres Betonelementteil mit daran eingegossenen Gitterträgerelementen ein vorgefertigtes Element verwendet wird, das am Verbauort in seine Montageendstellung gebracht wird, wonach die Rohrleitungen verlegt und die zweite Betonelementschicht, gegebenenfalls nach vorheriger Einbringung einer Bewehrung, gegossen wird. Alternativ dazu besteht, wie ausgeführt, die Möglichkeit, das komplette Betonelement werkseitig fertig zu stellen und als Fertigbauteil am Verbauort zu verbauen.

Neben dem erfindungsgemäßen Verfahren betrifft die Erfindung ferner ein Betonelement, hergestellt durch das erfindungsgemäße Verfahren. Ein solches Betonelement zur Bildung einer Decke oder eines Bodens eines Bauwerks zeichnet sich erfindungsgemäß dadurch aus, dass an den Gitterträgerelementen (2) schienen- oder plattenartige Rohrhalteelementen (4) befestigt sind, die oberseitige Rohrhalterungen (8) aufweisen und im Wesentlichen senkrecht zu den eingegossenen Gitterträgerelementen (2) angeordnet sind.

Die schienenartigen Rohrhalteelemente verlaufen dabei im Wesentlichen parallel zueinander und um wenigstens 25 cm, insbesondere um wenigstens 50 cm voneinander beabstandet. Die Rohrhalterungen selbst können als Clips-, Klemm- oder Rasthalterungen ausgebildet sein, wobei die Rohrhalteelemente selbst zweckmäßigerweise aus Kunststoff gebildet sind. Im Hinblick auf ein möglichst einfaches Verbauen des Betonelements vor Ort ist dieses zweckmäßigerweise als Fertigteil ausgebildet.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Perspektivskizze eines unteren Betonelementteils mit eingegossenen Gitterträgerelementen und oberseitig angebrachten Rohrelementhalterungen,
- Fig. 2: eine vergrößerte Darstellung eines Teils der Betonelementschicht aus Fig. 1 mit verlegten Rohrleitungen und
- Fig. 3: eine Schnittansicht durch ein fertiges Betonelement in Form einer Prinzipskizze.

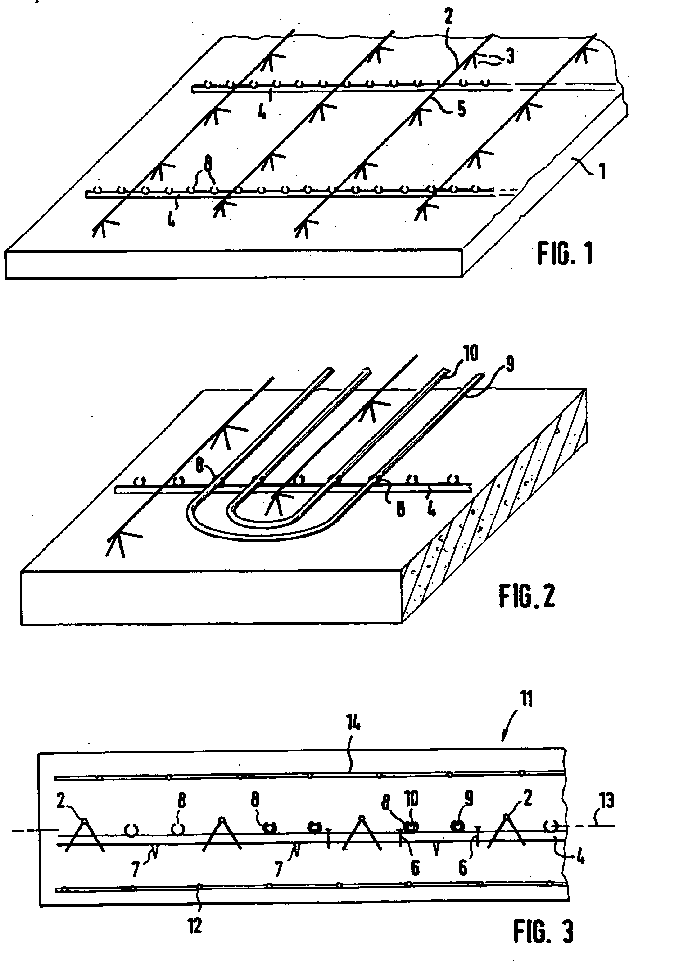

Fig. 1 zeigt in Form einer Prinzipskizze eine Darstellung eines unteren Betonelementteils 1. Diese wird - egal, ob basierend auf dem Betonelementteil 1 ein Fertigbetonelement im Betonwerk hergestellt, oder ob dieses Betonelementteil als vorgefertigtes Elementteil an die Baustelle transportiert und dort komplettiert wird - auf jeden Fall betonwerkseitig gegossen. In das Betonelementteil 1 werden Gitterträgerelemente 2 eingegossen, die mit ihren fußartigen Trägerelementen 3 im Beton eingegossen sind. Sie ragen etwas über die Oberseite der Betonelementschicht 1 heraus. Ersichtlich laufen die Gitterträgerelemente 2 parallel in einer ersten ausgezeichneten Richtung. Im Wesentlichen senkrecht dazu sind im gezeigten Ausführungsbeispiel schienen- oder plattenartige Rohrhalteelemente 4 angeordnet. Diese sind im gezeigten Beispiel unter die Gitterträgerelemente 2 bzw. deren Längsstäbe 5 geschoben bzw. angeordnet.
Die Rohrhalteelemente 4 werden nach dem Gießen der unteren Betonelementschicht 1, in die die Gitterträgerelemente 2 bereits eingegossen sind, angebracht. In diesem Fall werden sie unter die Querstangen 5 der Gitterträgerelemente 2 geschoben und unter Verwendung von z. B. Befestigungsnägeln 6 (siehe Fig. 3), die in den weitgehend ausgehärteten Beton zu treiben sind, fixiert. Zur primären Fixierung vor dem Vergießen der oberen Betonelementschicht werden die Rohrhalteelemente 4 zweckmäßigerweise an den Gitterträgerelementen mittels Mattenbindern oder dergleichen fixiert.

An der Oberseite der Rohrhaltelemente 4 sind Rohrhalterungen 8 vorgesehen. Diese sind im gezeigten Ausführungsbeispiel als nach oben offene, U-förmige Klemmaufnahmen ausgebildet. Zum Verlegen der Rohrleitungen 9, 10 - siehe Fig. 2 - die in der Regel mäanderförmig verlegt werden, werden die Rohrleitungen einfach von oben in die Klemmhalterungen 8 eingedrückt, wo sie verklemmen oder verrasten. Aufgrund der Beabstandung der Rohrhalteelemente 4 von ca. einem halben Meter voneinander ist eine sichere Fixierung der Rohrleitungen 9, 10 möglich.

Die Gitterträgerelemente 2 verlaufen bei der gezeigten Betonelementschicht nicht bis zum Rand, sondern enden so weit vorher, dass die Rohrleitungen 9, 10 randseitig umgebogen und wieder zurückgeführt werden können.

Aufgrund der Beabstandung der Rohrhalterungen entlang der Rohrhalteelemente können die Rohrleitungen nicht mit zu geringem Biegeradius verlegt werden bzw. ist ein Verrutschen insoweit auch ausgeschlossen, so dass Knicke und dergleichen im Bereich der Umlenkungen vermieden werden. Nach dem Verlegen der Rohrleitungen und dem Herausführen der Rohrleitungsenden für spätere Anschlüsse etc. wird eine obere Bewehrungsmatte aufgebracht, wonach die obere Betonelementschicht gegossen wird.

Wie ausgeführt können beginnend mit dem Verlegen der Rohrhalteelemente 4 bis zum endgültigen Aufbringen der oberen Betonelementschicht diese Handlungen vor Ort nach Aufsetzen der betonwerkseitig vorgefertigten Betonelementschicht 1 durchgeführt werden. Alternativ kann das komplette Betonelement auch im Betonwerk vorgefertigt werden und als Fertigbauteil baustellenseitig verbaut werden.

Eine Schnittansicht durch ein erfindungsgemäßes Betonelement 11 zeigt Fig. 3. Hier kann insoweit nicht mehr zwischen einem unteren und einem oberen Betonelementteil unterschieden werden. Das erfindungsgemäße Betonelement umfasst eine untere Bewehrungslage 12, sowie die Gitterträgerelemente 2, die beabstandet zueinander angeordnet sind. Im Hinblick auf die Umlenkung der Rohrleitungen sind diese Gitterträgerelemente in ihrer Längsrichtung versetzt zueinander angeordnet, so dass aufgrund der mäanderführigen Leitungsführung jeweils alternierend entsprechende Umbiegefreiräume an den Enden der Gitterträgerelemente gegeben sind. Unterhalb der Gitterträgerelemente 2 verläuft hier das Rohrhalteelement 4. Wie bereits ausgeführt sind die Haltezapfen 7 nicht zwingend erforderlich. Daneben sind Befestigungsnägel 6 gezeigt, über die das Rohrhalteelement 4 zusätzlich fixiert ist.

An den oberseitig am Rohrhalteelement 4 vorgesehenen Rohrhalterungen 8 sind die Rohrleitungen 9, 10 gehaltert. Kommen zwei Rohrleitungen 9, 10 zum Einsatz, so ist eine Doppelmäanderverlegeform gebildet. Gleichwohl kann natürlich auch mit einer einzigen Rohrleitung gearbeitet werden oder andere Verlegemuster gewählt werden.

Ersichtlich ist, dass alle Rohrhalteelemente 4 so positioniert sind, dass die Rohrhalterungen 8 im Wesentlichen in der Ebene der neutralen Faser 13, also der Mittelebene des fertigen Betonelements 11 liegen. In dieser Ebene wirken auf darin befindliche Betonelementteile auch im Falle einer lastbedingten Verbiegung des Betonelements keine Kräfte, so dass eine Beschädigung der verlegten Rohrleitungen hierdurch ausgeschlossen ist.

Schließlich ist eine obere Bewehrungslage 14 vorgesehen, wobei auch hier bekannte Baustahlmatten oder dergleichen verwendet werden können.

Die gesamte Konfiguration ist im Beton eingegossen. Dieser Aufbau wird erhalten, egal, ob es sich um ein betonwerkseitig hergestelltes Fertigteil handelt, oder ob die Rohrverlegung und eigentliche Fertigstellung bauwerkseitig erfolgt.
Nach dem Positionieren oder Fertigstellen werden die verlegten Rohrleitungen über entsprechende nicht gezeigte Anschlüsse an einen Fluidkreislauf angeschlossen, über den das Heiz- oder Kühlmedium zirkuliert.

## Patentansprüche

1. Verfahren zur Herstellung eines eine Decke oder einen Boden bildenden Betonelements (11), umfassend folgende Schritte:
- Herstellen eines unteren Betonelementteils (1) mit oberseitig vorstehenden Gitterträgerelementen (2),
- Anordnen von schienen- oder plattenartigen Rohrhalteelementen (4), die oberseitige Rohrhalterungen (8) aufweisen, an und im Wesentlichen senkrecht zu den eingegossenen Gitterträgerelementen (2),
- Verlegen einer oder mehrerer zur Führung eines Heiz- oder Kühlmediums dienenden Rohrleitungen (9, 10), die lagestabil an den Rohrhalterungen (8) der Rohrhalteelemente (4) befestigt werden, und
- Gießen eines oberen Betonelementteils zur Fertigstellung des Betondeckenelements (11).

2. Verfahren nach Anspruch 1, **dadurch gekennzeichnet, dass** die schienenartigen Rohrhalteelemente (4) im Wesentlichen parallel zueinander und um wenigstens 25 cm, insbesondere um wenigstens 50 cm voneinander beabstandet angeordnet werden.

3. Verfahren nach Anspruch 1 oder 2, **dadurch gekennzeichnet, dass** die schienenartigen Rohrhalteelemente (4) an den Gitterträgerelementen (2) klemmend oder mittels Mattenbindern oder dergleichen befestigt werden.

4. Verfahren nach einem der vorgenannten Ansprüche, **dadurch gekennzeichnet, dass** als unteres Betonelementteil (1) mit daran eingegossenen Gitterträgerelementen (2) ein vorgefertigtes Element verwendet wird, das am Verbauort in seine Montageendstellung gebracht wird, wonach die Rohrleitungen (4) verlegt und das zweite Betonelementteil, gegebenenfalls nach vorheriger Einbringung einer Bewehrung (14) gegossen wird.

5. Betonelement (11) zur Bildung einer Bauwerksdecke oder eines Bauwerksbodens bestehend aus einem unteren (1) und einem oberen Betonelementteil mit eingegossenen, oberseitig über das untere Betonelementteil (1) vorstehenden Gitterträgerelementen (2), **dadurch gekennzeichnet, dass** an den Gitterträgerelementen (2) schienen- oder plattenartige Rohrhalteelementen (4) befestigt sind, die oberseitige Rohrhalterungen (8) aufweisen und im Wesentlichen senkrecht zu den eingegossenen Gitterträgerelementen (2) angeordnet sind.

6. Betonelement (11) nach Anspruch 5, **dadurch gekennzeichnet, dass** die schienenartigen Rohrhalteelemente (4) im Wesentlichen parallel zueinander und um wenigstens 25 cm, insbesondere um wenigstens 50 cm voneinander beabstandet angeordnet sind.

7. Betonelement (11) nach einem der Ansprüche 5 oder 6, **dadurch gekennzeichnet, dass** die Rohrhalterungen (8) als Clips-, Klemm- oder Rastverbindungen ausgebildet sind.

8. Betonelement nach einem der vorangehenden Ansprüche, **dadurch gekennzeichnet, dass** die Rohrhalteelemente (4) aus Kunststoff sind.

## Claims

1. Process to manufacture a concrete element (11) to form a ceiling or floor, comprising the following steps:
- Production of a lower concrete element section (1) with grid-bearing elements (2) projecting from the top
- Placement of rail or plate-shaped pipe holder elements (4) with pipe holders (8) at the top on and vertically to the encased grid-bearing elements (2).
- Laying of one or more pipes (9, 10) designed to convey a heating or cooling medium, fastened and held in place by the pipe holders (8) of the pipe holder elements (4).
- Casting of an upper concrete element section to complete the concrete ceiling element (11).

2. Process according to Claim 1, **characterised by**: The rail-shaped pipe holder elements (4) run mainly parallel to each other at a distance of at least 25 cm and particularly at least 50 cm from each other.

3. Process according to Claim 1 or 2, **characterised by**: The rail-shaped pipe holder elements (4) are fastened by clamping or with mat ties or similar to the grid-bearing elements (2).

4. Process according to one of the above claims, **characterised by**: A prefabricated element is used as the lower concrete element section (1) with the encased grid-bearing elements (2), which is placed in its final position at the installation site, after which the piping (4) is laid and the second concrete element section is cast, possibly after reinforcement (14) has been inserted.

5. Concrete element (11) to form a ceiling or floor of a building, consisting of a lower (1) and an upper concrete section with encased grid-bearing elements (2) projecting from the top of the lower concrete element section (1), **characterised by**: Rail or plate-shaped pipe holder elements (4) are fastened to the grid-bearing elements (2) and have pipe holders (8) at the top and are placed vertically to the encased grid-bearing elements (2).

6. Concrete element (11) according to Claim 5, **characterised by**: The rail-shaped pipe holder elements (4) run mainly parallel to each other at a distance of at least 25 cm and particularly at least 50 cm from each other.

7. Concrete element (11) according to Claims 5 or 6, **characterised by**: The pipe holders (8) are formed as clip, clamp or clasp connectors.

8. Concrete element according to one of the above claims, **characterised by**: The pipe holder elements (4) are made of plastic.

## Revendications

1. Procédé destiné à la fabrication d'un élément en béton (11) formant un plafond ou un sol, comprenant les étapes suivantes:
- Fabrication d'une partie inférieure d'élément en béton (1) avec des éléments de poutre en treillis (2) en saillie sur la face supérieure,
- Agencement d'éléments de support de tuyau de type rail ou plaque (4), qui présentent des fixations de tuyau (8) sur la face supérieure, sur et pour l'essentiel verticalement par rapport aux éléments de poutre en treillis (2) incorporés par coulage,
- Pose d'une ou de plusieurs tuyauteries (9, 10), qui sont fixées en position stable sur les fixations de tuyau (8) des éléments de support de tuyau (4), servant de guidage pour un fluide de chauffage ou de refroidissement et
- Coulée d'une partie supérieure d'élément en béton destinée à achever l'élément de plafond en béton (11).

2. Procédé selon la revendication 1, **caractérisé en ce que** les éléments de support de tuyau de type rail (4) sont disposés pour l'essentiel parallèlement entre eux et à une distance minimum de 25 cm, en particulier à une distance minimum de 50 cm.

3. Procédé selon la revendication 1 ou 2, **caractérisé en ce que** les éléments de support de tuyau de type rail (4) sont fixés sur les éléments de poutre en treillis (2) par serrage ou au moyen d'attache-treillis ou similaires.

4. Procédé selon l'une des revendications susnommées, **caractérisé en ce qu'**on utilise comme partie inférieure d'élément de béton (1), avec les éléments de poutre de treillis (2) incorporés par coulage, un élément préfabriqué qui est placé dans sa position finale de montage sur le lieu d'installation, en posant ensuite les tuyauteries (4) et en coulant la deuxième partie d'élément de béton après mise en place préalable d'une armature (14) si nécessaire.

5. Elément en béton (11) destiné à former un plafond d'ouvrage ou un sol d'ouvrage composé d'une partie d'élément en béton inférieure (1) et supérieure avec des éléments de poutre en treillis (2) incorporés par coulage, en saillie, sur la face supérieure, au-dessus de la partie d'élément en béton inférieure (1), **caractérisé en ce que** sur les éléments de poutre en treillis (2) sont fixés des éléments de support de tuyau de type rail ou plaque (4) qui présentent des fixations de tuyau (8) sur la face supérieure et qui sont agencés, pour l'essentiel, verticalement par rapport aux éléments de poutre en treillis (2) incorporés par coulage.

6. Elément en béton (11) selon la revendication 5, **caractérisé en ce que** les éléments de support de tuyau de type rail (4) sont disposés pour l'essentiel parallèlement entre eux et à une distance minimum de 25 cm, en particulier à une distance minimum de 50 cm.

7. Elément en béton (11) selon la revendication 5 ou 6, **caractérisé en ce que** les fixations de tuyau (8) sont conçues sous forme d'assemblages à clipser, serrer ou encliqueter.

8. Elément de béton selon l'une des revendications précédentes, **caractérisé en ce que** les éléments de support de tuyau (4) sont réalisés en plastique.
